# EUROPÄISCHE PATENTANMELDUNG

(11) **EP 0 700 849 A1**
(43) Veröffentlichungstag der Anmeldung: **13.03.1996**
(21) Anmeldenummer: 95113706.6
(22) Anmeldetag: 31.08.1995
(51) Int. Cl.: B65G 47/88

(54) **Vereinzelungsvorrichtung**

(30) Priorität: 07.09.1994 DE 4431902
(71) Anmelder: Gärtner, Franz, D-97659 Unterelsbach (DE)
(72) Erfinder: Gärtner, Franz, D-97659 Unterelsbach (DE)
(74) Vertreter: Patentanwälte Dr. Solf & Zapf

(57) **Zusammenfassung**

Die Erfindung betrifft eine Vereinzelungsvorrichtung für Kleiderbügel im innerbetrieblichen Förderwesen mit einer Gleitschiene mit Gefälle, auf der Kleiderbügel aufgelegt sind, einer über der Gleitschiene schwenkbar gelagerten Haltevorrichtung mit einem ein Anhalten und Stauen der Haken verursachenden Anschlagelement, das bis zur Oberseite der Gleitschine absenkbar ist, einem Vereinzelungsteil für einen am Anschlagelement anliegenden Haken, das mit einem Antrieb zur Anhebung und Absenkung des Vereinzelungsteils verbunden ist und eine Vereinzelungsteilspitze aufweist, die in einem bestimmten Abstand vom Anschlagelement eine Trennung des ersten Hakens von nachfolgenden Haken durchführt, wobei der Antrieb mit der Haltevorrichtung über einen Schaltmechanismus verbunden ist, der nach Trennung des ersten Hakens das Anschlagelement hebt und die Gleitschiene freigibt, und das Vereinzelungstseil (9) entgegen der Förderrichtung (22) ausweichend angeordnet ist, so daß der Abstand (X) zwischen der Vereinzelungsteilspitze (10) und dem Anschlagelement (2) vergrößerbar ist, und die Vereinzelungsteilspitze (10) auf der zum Anschlagelement (2) gerichteten Seite eine Schräge (29) aufweist, die bei Trennung der ersten Haken tangiert, und die schwenkbar gelagerte Haltevorrichtung (3) eine Drehachse (6) besitzt, die sich in Förderrichtung (22) nach dem Anschlagelement (2) befindet.

## Beschreibung

Die Erfindung betrifft eine Vereinzelungsvorrichtung für Kleiderbügelhaken im innerbetrieblichen Förderwesen, insbesondere in der Bekleidungsindustreie gemäß dem Oberbegriff des Anspruchs 1.

Es ist eine Vereinzelungsvorrichtung für Kleiderbügel (DE-Gbm 90 03 011.7) bekannt, die eine Haltevorrichtung mit einem Anschlagelement und ein Vereinzelungsteil besitzt, die sich stauende Kleiderbügelhaken auf einer Gleitschiene, die ein Gefälle aufweist, im gemeinsamen Zusammenwirken vereinzeln.

Dabei ist der Abstand zwischen dem Anschlagelement und dem Vereinzelungsteil auf der Gleitschiene dimensional fest eingestellt. Dadurch bewegt sich das Vereinzelungsteil während seiner Betätigungsphase nur in einer fest eingestellten Richtung, der Trenn- oder Abstechrichtung. In der Realität haben die Kleiderbügelhaken neben kleineren auch größere Durchmesser bzw. verschiedene Dimensionsmaße als es der fest eingestellte Abstand darstellt. Bei Trennung eines mit größeren Maßen versehenen Hakens von anderen hinter ihm auf der Gleitschiene sich stauenden Haken wird dieser vom Vereinzelungsteil nach oben gestoßen und längs des nicht senkrecht zur Gleitschiene gerichteten, angeordneten Anschlagelements von der Gleitschiene weg verschoben. Der überdimensionale Maße aufweisende Haken rutscht nach Freigabe durch die wirkende Schwerkraft längs des Anschlagselements nach unten und fällt schließlich auf die Oberseite der Gleitschiene zur weiteren Förderung.

Dieses Hochheben, Abrutschen und Fallenlassen von Kleiderbügelhaken stellt eine Verzögerung im Vereinzelungsprozeß dar. Insbesondere die von Haken zu Haken auftretende unterschiedliche Teilverzögerung beim Abrutschen vom Anschlagelement herunter infolge auch unterschiedlicher Haftreibungen erfordert notwendige Zeitvorgaben, die eine Beschränkung des Vereinzelungsdurchsatzes bedeuten. Als Folge solcher Verzögerungen können Komplikationen bei einer gewünschten Steigerung des Vereinzelungsdurchsatzes auftreten, die oftmals Defekte in der Vereinzelungsvorrichtung zur Folge haben.

Der Erfindung liegt die Aufgabe zugrunde, eine Vereinzelungsvorrichtung anzugeben, mit der der Vereinzelungsdurchsatz sich stauender Kleiderbügelhaken bei Vermeidung von Schäden an Haken und Vereinzelungsvorrichtung erhöht werden kann.

Diese Aufgabe wird durch die im Anspruch 1 angegebene Erfindung gelöst. Weiterbildungen und vorteilhafte Ausgestaltungen der Erfindung sind in den Unteransprüchen angegeben.

Die Erfindung eröffnet die Möglichkeit, Haken von Kleiderbügeln mit unterschiedlichen Ausmaßen im Moment ihrer Vereinzelung am Vereinzelungsort vor dem Anschlagelement zu fixieren. Im Moment des Trennungsprozesses ist das Vereinzelungsteil entgegengesetzt zur Förderrichtung verschiebbar. Das ist möglich durch die erfindungsgemäße Ausbildung der Vereinzelungsteilspitze, durch das verschiebbar gelagerte Vereinzelungsteil und die Niederhaltevorrichtung, die den zu vereinzelnden Haken in Richtung Oberseite Widerstand entgegensetzt und zur Gleitschiene hin drückt. Auch bei der Möglichkeit des Auftreffens der Vereinzelungsteilspitze auf die Mitte eines Hakens ist die Niederhaltevorrichtung in der Lage, gegen ihre Federunterstützung auszuweichen. Die Haltevorrichtung bleibt unbewegt. Somit wird in kontrollierter Weise eine Freigabe des ersten Hakens vermieden. Ebenso nehmen weder Haken noch Vereinzelungsteilspitze Schaden.

Die Erfindung hat den weiteren Vorteil, daß durch das Verbleiben des zu vereinzelnden Kleiderbügelhakens durch die Wirkung der Niederhaltevorrichtung auf der Gleitschiene vor dem Anschlagelement die Vereinzelungsdauer verringert wird.

Die Erfindung eröffnet weiterhin die Möglichkeit, über die Geschwindigkeit des Wechsels bzw. von Anhebung und Absenkung der Vereinzelungsteilspitze aus Ausgangslage der Vereinzelungsteilspitze in Trennlage der Vereinzelungsteilspitze und umgekehrt durch den Antrieb den Vereinzelungsdurchsatz (Stückzahl/Zeiteinheit) der zu vereinzelnden Haken einstellbar zu gestalten.

Durch die in den Unteransprüchen ausgeführten Maßnahmen sind vorteilhafte Weiterbildungen der im Anspruch 1 angegebenen Merkmale möglich. Weitere Vorteile der Erfindung werden in der nachstehenden Erläuterung anhand eines in den Zeichnungen dargestellten Ausführungsbeispiels beschrieben.

Es zeigen:
- Fig. 1: schematische, teils perspektivische Darstellung einer Vereinzelungsvorrichtung ohne Niederhaltevorrichtung und mit nur einem Schienenteil,
- Fig. 2: Ansicht eines Teils der Vereinzelungsvorrichtung ohne Vereinzelungsteil und
- Fig. 3: Ansicht der Vereinzelungsvorrichtung quer zur Förderrichtung,
- Fig. 4: Seitenansicht einer Vereinzelungsteilspitze.

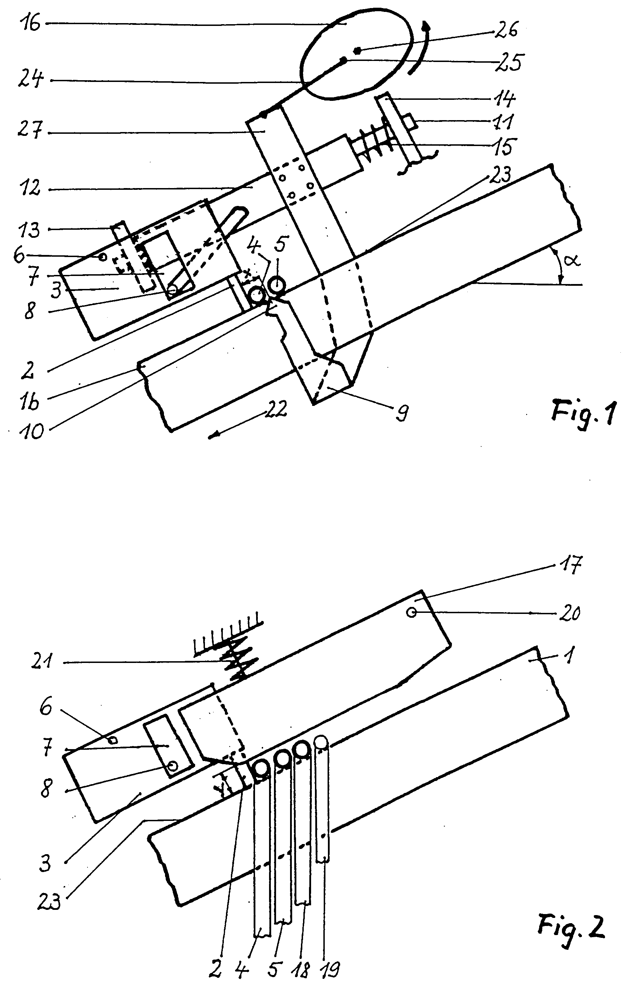

In Fig. 1 ist eine Vereinzelungsvorrichtung dargestellt. Auf einer Gleitschiene 1, deren Gefälle einen Winkel α (ca. 25°) aufweist, befinden sich vor einem Anschlagelement 2 einer Halteeinrichtung 3 ein erster und ein zweiter Kleiderbügelhaken 4 und 5. Die Halteeinrichtung 3 ist als schwenkbarer Hebel ausgebildet, dessen Drehachse 6 sich in Förderrichtung nach dem Anschlagelement 2 befindet und eine Langlochaussparung 7 besitzt, in die ein Betätigungselement 8 eingreift. Die Drehachse 6 besitzt eine höhere Lage als der Berührungspunkt zwischen Anschlagelement 2 und dem anliegenden ersten Haken 4, um ein Verriegeln der Gleitschiene 1 durch das Anschlagelement 2 zu erreichen.

Die Gleitschiene 1 besteht aus zwei parallel angeordneten Schienenteilen 1a und 1b. In Fig. 1 wird das Schienenteil 1b dargestellt, damit die Position eines Vereinzelungsteils 9 deutlicher erkannt werden kann. Das Vereinzelungsteil 9 besitzt eine Vereinzelungsteilspitze 10, die zwischen den beiden Schienenteilen 1a und 1b angeordnet ist und von unten geführt wird. Das Vereinzelungsteil 9 ist an einer um eine parallel zur Gleitschiene 1 verlaufende Drehachse 11 gelagerte Hülse 12 befestigt, die an einem ersten Anschlag 13 anliegt. Von einem zweiten höher gelegenen Anschlag 14 aus, in dem die Drehachse 11 geführt ist, wird die Hülse 12 von einer Druckfeder 15 gegen den ersten Anschlag 13 mit Federkraft gedrückt. Damit ist neben der Hülse 12 auch das Vereinzelungsteil 9 und somit die Vereinzelungsteilspitze 10 entgegen der Förderrichtung 22 verschieblich angeordnet. Von der Hülse 12 aus ist das Vereinzelungsteil 9 mit einem exzentrischen Antrieb 16 verbunden, der bei Rotation die Hülse 12 auf der Drehachse 11 wippt und somit die Vereinzelungsteilspitze 10 aus ihrer Ausgangslage an der Oberseite 23 der Gleitschiene 1 in eine Trennlage und zurück führt, das heißt anhebt und absenkt. Das an der Hülse 12 angebrachte und in die Langlochaussparung 7 reichende Betätigungselement 8 hebt und senkt je nach Drehung der Hülse 12 die Haltevorrichtung 3 um deren Drehachse 6. Betätigungselement 8 und Hülse 12 stellen einen Schaltmechanismus 8, 12 dar, der die Freigabe des abgestochenen und getrennten Haken veranlaßt.

In Fig. 2 ist eine Niederhaltevorrichtung 17 parallel über der Gleitschiene 1 angeordnet. Sie besitzt die Aufgabe, die sich vor dem Anschlagelement 2 stauenden Kleiderbügelhaken 4, 5, 18 und 19 in einer Reihenfolge auszurichten. Sie verhindert außerdem, daß der nachfolgende Haken 5 über die Vereinzelungsteilspitze 10 rutschen kann und somit gleichzeitig zwei Haken freigegeben werden. In Fig. 1. ist die Niederhaltevorrichtung wegen der Übersichtlichkeit nicht gezeichnet. Andererseits wird zur besseren Ansicht in Fig. 2 auf das Vereinzelungsteil 9 mit nachfolgenden Anordnungen verzichtet. In Fig. 2 ist die Niederhaltevorrichtung als schwenkbarer Hebel ausgeführt, der einem Heben mindestens des ersten Hakens 4 beim Trennen des Hakens 4 von benachbarten Haken 5, 18 und 19 einen Widerstand entgegensetzt. Dieser Widerstand gegen ein Hochheben des Hakens 4 wird durch eine Druckfeder 21, die mit der zu den Haken 4, 5 abgewandten Seite der Niederhaltevorrichtung 17 in Verbindung steht, unterstützt. Somit bleibt mindestens der abzutrennende erste Haken 4 in unmittelbarer Nähe der Gleitschiene 1. Normalerweise befindet sich die Niederhaltevorrichtung im Abstand y von der Oberseite 23 der Gleitschiene 1 entfernt.

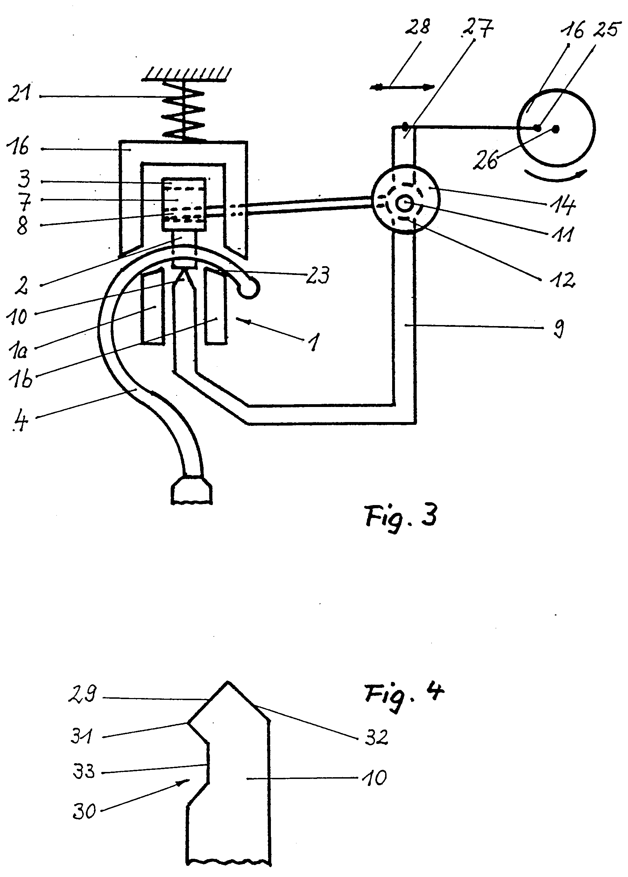

Fig. 3 zeigt eine Ansicht der Vereinzelungsvorrichtung quer zur Förderrichtung 22. Aus Fig. 3 ist ersichtlich, daß der Kleiderbügelhaken 4 auf der Oberseite 23 der Gleitschiene 1 aufliegt. Diese Gleitschiene 1 kann auch ein u-förmiges Profil aufweisen, das dann allerdings eine Durchgriffsöffnung für das Vereinzelungsteil 9 benötigt. Ebenso kann die Gleitschiene 1 als Rohr mit zwei diametral gegenüberliegenden Durchgriffsöffnungen für die Bewegung des Vereinzelungsteils 9 ausgeführt sein.

Der exzentrische Antrieb 16 ist in der Fig. 1 als Antriebsscheibe ausgebildet und weist eine Führungsstange 24 auf, die von einem Befestigungspunkt 25 außerhalb des Antriebsscheibenmittelpunktes 26 zum Hebel 27, der mit der Hülse 12 verbunden ist, führt. Durch diese Verbindung wird bei Rotation der Antriebsscheibe 16 das Vereinzelungsteil 9 in einen wippartigen Prozeß des Anhebens und Absenkens versetzt, dessen Endlagen jeweils die Ausgangslage an der Oberseite 23 und die schon genannte Trennlage darstellen. Die Pfeilrichtungen 28 geben den durch exzentrischen Antrieb 16 erzeugenden Wippmechanismus wieder. Dieser Wippmechanismus kann auch durch eine am Hebel 27 vorbeigeführte Mitnahmeeinrichtung einer Sortierförderanlage entstehen. Dazu ist aber an den Hebel eine Rolle zu befestigen, so daß an der Mitnahmeeinrichtung befestigte Auflaufkufen die Rolle betätigen können.

In Fig. 4 ist eine Variante der Vereinzelungsteilspitze 10 dargestellt. Die Schräge 29 ist zum Anschlagelement 8 gerichtet und berührt bei Trennung tangential den ersten Kleiderbügelhaken 4. Unterhalb der Schräge 29 befindet sich eine in Förderrichtung 22 öffnende Ausnehmung 30. Beide werden durch einen Vorsprung 31 getrennt. Die der Schräge 29 gegenüberliegende Fläche 32 kann, wie in Fig. 4 gezeigt, ebenso schräg geneigt sein.

Die Vereinzelungsvorrichtung arbeitet wie folgt:
Die Haken 4, 5 und 18, 19 gleiten längs der Gleitschiene 1 und werden durch das Anschlagelement 2 zum Anhalten gezwungen. Es bildet sich ein Stau von Kleiderbügelhaken. Über den exzentrischen Antrieb 16 und Hebel 27 wird das Vereinzelungsteil 9 um die Drehachse 11 angehoben und nach oben bewegt. Die Vereinzelungsteilspitze 10 sticht zwischen die beiden Kleiderbügelhaken 4 und 5 hindurch und trennt beide. Der Abstand x zwischen dem Anschlagelement 2 und der Vereinzelungsteilspitze 10 ist frei wählbar. Im allgemeinen wird der Abstand x nach mittleren Maßen der zu vereinzelnden Kleiderbügelhaken eingestellt. Es kann aber auch möglich sein, daß aufgrund marktakzeptierter neuer Maße eine gänzlich neue Voreinstellung des Abstandes x vorzunehmen ist. Aufgrund der Schräge 29 bewegt sich auch bei überdimensionale Maße aufweisenden Haken das Vereinzelungsteil gegen die Federkraft der Druckfeder 15 der Förderrichtung 22 entgegen. Diese Verschieblichkeit des Vereinzelungsteils bedingt weniger Schadensanfälligkeit beim Abstechen und Trennen des ersten Hakens 4. Zusätzlich verhindert die Niederhaltevorrichtung 17, daß Haken 5 über die Vereinzelungsteilspitze 10 nachgleiten und somit durch das Anschlagelement 2 die beiden Haken 4 und 5 gleichzeitig freigegeben werden können. Die Kleiderbügelhaken 5, 18 und 19 werden über Fläche 32 der Vereinzelungsteilspitze 10 entgegengesetzt zur Förderrichtung 22 verschoben. Somit sind die beiden Haken 4 und 5 voneinander getrennt. Nachdem sich die Vereinzelungsteilspitze 10 nach oben bewegt hat (3 bis 4 mm), befindet sich der Haken 4 freibeweglich in der Ausnehmung 30 und liegt dort an der Ausnehmungswand 33 an. Wippt das Vereinzelungsteil 9 weiter um die Drehachse 11, so liegt das Betätigungselement 8 an der Oberkante der Langlochaussparung 7 an und hebt das Anschlagelement 2 um die Drehachse 6 an, so daß der Haken 4 in Förderrichtung 22 freigegeben wird. Durch die Ausnehmung 30 wird eine Druckbelastung des Anschlagelements 2 vermieden, so daß ohne Verschleiß für Haken 4, Anschlagelement 2 und Vereinzelungsteilspitze 10 der Haken 4 vom Anschlagelement 2 ohne Druckanwendung freigegeben wird. Somit werden Störungen in der Vereinzelungsvorrichtung vermieden. Über die Drehgeschwindigkeit des exzentrischen Antriebs 16 kann die Stückzahl pro Zeiteinheit der zu vereinzelnden Haken eingestellt werden.

Als exzentrischer Antrieb, der im Prinzip nur den dauernden Wechsel zwischen zwei Endlagen, das heißt zwischen Anheben und Absenken des Vereinzelungsteils herbeiführen muß, können auch andere Vorrichtungen, die Endlagen erzeugen können, verwendet werden, zum Beispiel ein Pneumatikzylinder, der an Hebel 27 angeschlossen werden kann, oder einen gesteuerten Magnetanker, der ebenfalls mit dem Hebel 27 verbunden sein kann.

Auch durch eine am Hebel 27 angebrachte Rolle, die durch Auflaufkufen, die an Mitnahmeeinrichtungen einer Sortierförderanlage angebracht sind, bedient werden kann, kann das Vereinzelungsteil 9 betätigt werden.

Nach der Freigabe des Hakens 4 wippt das Vereinzelungsteil 9 durch Absenken in seine Ausgangslage an der Oberseite 23 der Gleitschiene 1 zurück und das Vereinzelungsteil 9 steht zur Trennung des jetzt am Anschlagelement 2 anliegenden Hakens 5 von den benachbarten Haken 18, 19 zur weiteren Verfügung.

## Patentansprüche

1. Vereinzelungsvorrichtung für Kleiderbügel im innerbetrieblichen Förderwesen, insbesondere in der Bekleidungsindustrie mit folgenden Merkmalen:
a) Es ist eine Gleitschiene mit Gefälle vorhanden, auf deren Oberseite Kleiderbügel mit ihren Haken zur Förderung aufgelegt sind,
b) es ist über der Gleitschiene eine schwenkbar gelagerte Haltevorrichtung mit einem ein Anhalten und Stauen der Haken verursachenden Anschlagelement, das mindestens bis zur Oberseite der Gleitschiene absenkbar ist, vorgesehen,
c) es ist ein Vereinzelungsteil für einen am Anschlagelement anliegenden Haken vorhanden, das mit einem Antrieb zur Anhebung und Absenkung des Vereinzelungsteils an der Oberseite der Gleitschiene verbunden ist und eine Vereinzelungsteilspitze aufweist, die in einem bestimmten Abstand (X) vom Anschlagelement eine Trennung des anliegenden ersten Hakens von nachfolgenden Haken durchführt,
d) der Antrieb zur Anhebung und Absenkung des Vereinzelungsteils ist mit der schwenkbar gelagerten Haltevorrichtung über einen Schaltmechanismus verbunden, der nach Trennung des ersten Hakens vom nachfolgenden Haken das Anschlagelement hebt und die Gleitschiene freigibt,
**gekennzeichnet durch**
folgende Merkmale:
e) das Vereinzelungsteil (9) ist entgegen der Förderrichtung (22) verschieblich bzw. ausweichend angeordnet, so daß der Abstand (X) zwischen der Vereinzelungsteilspitze (10) und dem Anschlagelement (2) während der Trennung vergrößerbar ist,
f) die Vereinzelungsteilspitze (10) weist auf der zum Anschlagelement (2) gerichteten Seite eine Schräge (29) auf, die bei Trennung den ersten Haken tangiert.
g) die schwenkbar gelagerte Haltevorrichtung (3) besitzt eine Drehachse (6), die sich in Förderrichtung (22) nach dem Anschlagelement (2) befindet.

2. Vereinzelungsvorrichtung nach Anspruch 1,
**dadurch gekennzeichnet,**
daß die Drehachse (6) der Haltevorrichtung eine höhere Lage besitzt als der Berührungspunkt zwischen Anschlagelement (2) und dem zu trennenden ersten Haken (4), um ein Verriegeln der Gleitschiene (1) durch das Anschlagelement (2) zu erreichen.

3. Vereinzelungsvorrichtung nach Anspruch 1 und 2,
**dadurch gekennzeichnet,**
daß parallel über der Gleitschiene (1) eine Niederhaltevorrichtung (17) angeordnet ist, die als schwenkbarer Hebel ausgeführt ist, der einem Heben mindestens des ersten Hakens (4) bei Trennung des Hakens (4) von den benachbarten Haken (5, 18, 19) einen Widerstand entgegensetzt und die sich stauenden Haken (4, 5, 18, 19) in Reihe ordnet.

4. Vereinzelungsvorrichtung nach Anspruch 1,
**dadurch gekennzeichnet,**
daß die Gleitschiene (1) aus zwei parallel angeordneten Schienenteilen (1a, 1b) besteht, zwischen denen das Vereinzelungsteil (9) mit Vereinzelungsteilspitze (10) anhebbar und absenkbar geführt ist.

5. Vereinzelungsvorrichtung nach Anspruch 1,
**dadurch gekennzeichnet,**
daß die Gleitschiene (1) aus u-förmigem Profil mit einer Durchgriffsöffnung für das Vereinzelungsteil (9) besteht.

6. Vereinzelungsvorrichtung nach Anspruch 1,
**dadurch gekennzeichnet,**
daß die Gleitschiene (1) aus einem Rohr mit zwei diametral gegenüberliegenden Durchgriffsöffnungen für die Bewegung des Vereinzelungsteils (9) besteht.

7. Vereinzelungsvorrichtung nach Anspruch 1,
**dadurch gekennzeichnet,**
daß die Niederhaltevorrichtung (17) ein u-förmiges Profil aufweist, dessen u-Öffnung zur Gleitschiene (1) gerichtet ist.

8. Vereinzelungsvorrichtung nach Anspruch 1,
**dadurch gekennzeichnet,**
daß die den Widerstand ausübende Niederhaltevorrichtung (17) in Richtung zur Oberseite (23) der Gleitschiene (1) druckkraftunterstützt ist, so daß mindestens der abzutrennende Haken (4) in unmittelbarer Nähe der Gleitschiene (1) bleibt.

9. Vereinzelungsvorrichtung nach Anspruch 8,
**dadurch gekennzeichnet,**
daß die Druckkraftunterstützung als Druckfeder (21) ausgebildet ist.

10. Vereinzelungsvorrichtung nach Anspruch 1,
**dadurch gekennzeichnet,**
daß-die Vereinzelungsteilspitze (10) unterhalb der Schräge (29) eine in Förderrichtung (22) gerichtete, geöffnete Ausnehmung (30) aufweist.

11. Vereinzelungsvorrichtung nach Anspruch 1,
**dadurch gekennzeichnet,**
daß das Vereinzelungsteil (9) in fester Verbindung mit einer parallel zur Gleitschiene (1) drehbar gelagerten Hülse (12) und einem schwenkbaren Hebel (27), der mit dem Antrieb (16) zur Anhebung und Absenkung der Vereinzelungsteilspitze (10) verbunden ist, steht und als Wippmechanismus ausgebildet ist.

12. Vereinzelungsvorrichtung nach Anspruch 11,
**dadurch gekennzeichnet,**
daß die Hülse (12) auf einer Drehachse (11) zwischen zwei Anschlägen (13, 14) gelagert ist, wobei sich zwischen Hülse (12) und zweitem höher gelegenem Anschlag (14) eine axial angeordnete Druckfeder befindet, die eine Verschiebung des Vereinzelungsteils (9) entgegen der Förderrichtung (22) ermöglicht.

13. Vereinzelungsvorrichtung nach Anspruch 1, 11 und 12,
**dadurch gekennzeichnet,**
daß die vom Antrieb (16) zur Anhebung und Absenkung des Vereinzelungsteils (9) betreibbare Hülse (12) und ein an der Hülse (12) befestigtes Betätigungselement (8) zum Schwenken der Haltevorrichtung (3) den Schaltmechanismus (8, 12) darstellen.

14. Vereinzelungsvorrichtung nach Anspruch 1 und 13,
**dadurch gekennzeichnet,**
daß die Haltevorrichtung (3) eine Langlochaussparung (7) aufweist, in die das Betätigungselement (8) zur Hebung der Haltevorrichtung (3) nach Trennung des ersten Hakens (4) von den nachfolgenden Haken (5, 18, 19) eingreift.

15. Vereinzelungsvorrichtung nach Anspruch 1,
**dadurch gekennzeichnet,**
daß der Antrieb (16) zur Anhebung und Absenkung der Vereinzelungsteilspitze (10) als ein motorisch angetriebener Exzenter, ein Pneumatikzylinder oder ein elektromagnetisch gesteuerter Hebel ausgebildet ist.

16. Vereinzelungsvorrichtung nach Anspruch 1,
**dadurch gekennzeichnet,**
daß der Antrieb zur Anhebung und Absenkung der Vereinzelungsteilspitze (10) (Wippmechanismus) aus einer am Hebel (27) befindlichen Rolle besteht, an der Auslaufkufen einer Mitnahmeeinrichtung einer Sortierförderanlage vorbeiführbar sind.
